# EUROPEAN PATENT SPECIFICATION

(11) **EP 2 744 045 B1**
(45) Date of publication and mention of the grant of the patent: **08.11.2017**
(21) Application number: 13195556.9
(22) Date of filing: 03.12.2013
(51) Int. Cl.: H01R 43/02, H01R 4/02, H01R 4/62, B23K 1/00, B23K 1/08, H05K 3/34

(54) **A method for brazing aluminium electrical conductors**
Verfahren für das Hartloten von elektrischen Leiter aus Aluminium
Procédé de brasage de conducteurs électriques d'aluminium

(30) Priority: 14.12.2012 IT MI20122147
(43) Date of publication of application: 18.06.2014
(73) Proprietor: Elica S.p.A., 60044 Fabriano (Ancona) (IT)
(72) Inventor: Mencaglia, Mauro, I- 60044 Fabriano, ANCONA (IT)
(74) Representative: Leihkauf, Steffen Falk

(56) References cited:
- EP-A1- 0 917 415
- US-A- 3 765 591
- US-A- 3 874 068
- US-A- 4 759 310
- US-A- 5 497 936

## Description

The present invention relates to a method for brazing electrical connectors in aluminium or aluminium alloys. Particularly, the invention relates to a brazing method of an electric cable in aluminium or aluminium alloy to a metal connection pin in an electric motor. The invention further relates to an electric motor having a connected aluminium conductor and a metal component connected to the conductor by such brazing method.

In the field of the present description, by the term brazing is meant the implementation of a steady connection of metal pieces by infiltration of a deposit metal between the overlapped surfaces to be connected, in which the deposit metal has a melting temperature below that of the materials composing the pieces to be connected and is molten by heating and brought in contact with the surfaces to be connected. Particularly, the present invention relates to the so-called soldering, in which a solder alloy is employed, having a melting temperature not much above 400°C.

In brazing, the connection is achieved by virtue of the adhesion by adsorption of the deposit metal on the surfaces, in which, anyhow, the formation of transition alloys in the connection area is not excluded. Therefore, the surfaces to be connected have to be very clean, which is obtained by an accurate cleaning and by the application of melting substances, or "fluxes", i.e., substances preventing the formation of surface oxide layers during the same brazing.

The most widely used deposit metal (or brazing alloy) is an alloy containing tin and copper or of tin and silver in variable percentages.

In the electric motors, as well as in other electric equipment, brazing is the most widespread connection system to implement electrically conductive and mechanically resistant connections.

In manufacturing an electric motor with a rotor, a stator, and a winding of conductive cable arranged about the stator, the conductive cable is wound about one or more plastic supports or "reels" that are then inserted above the poles of the stator package, and the conductive cable ends are brazed to connection pins secured into the plastic support and, in turn, electrically connected to terminals for the connection to the power grid.

The stator windings are typically made of copper by virtue of the excellent electric properties and the brazing suitability of such material.

However, the high cost of copper is directing interest towards less expensive materials, particularly aluminium, at least for those types of motors and applications where the lower electric conductivity of aluminium compared to copper, hence the higher overall dimensions of the winding are technically acceptable.

An example of a motor implementable with aluminium windings is monophase induction motors with cut or "shielded" poles that are widely used in household appliances, fans, and suction hoods.

A drawback not solved to date for using aluminium is the tenacity and thermal resistance of aluminium oxide, and the rapidity with which it forms on the surface of aluminium wires. Since aluminium oxide has a melting temperature (2030°C) much higher than that of pure aluminium (660°C), a high corrosion resistance, and a very high electrical resistance (in all regards, it is an insulator), it is hardly removable from the surfaces of the aluminium conductors, and reduces the wettability of the surfaces by the deposit metal. It follows that the brazing of aluminium wires still has drawbacks in electric conductivity and mechanical resistance.

The known measures to remove metal oxides from the surfaces to be connected and preventing the formation thereof comprise:
- applying melting materials or "fluxes", composed of mixtures of metal salts that are solid at room temperature, but which melt during heating (zinc chlorides, tin ammonium, rosin, hydrazine) that, beside to the protecting action, may also decrease the surface tension of the deposit metal in a molten state to promote the infiltration thereof;
- carrying out the brazing under a controlled atmosphere, for example, a reducing atmosphere (pure hydrogen or in combustion products, nitrogen-hydrogen mixtures), an inert atmosphere (helium, argon, cadmium or zinc vapors) or in vacuum.

It is known to carry out the brazing operation by dipping, in which the pieces, for example, a connection pin and the end of an electric wire, are coated with a flux layer and held in mutual contact, and then immersed together in a bath composed of the molten deposit metal and heated to the suitable brazing temperature.

It is further known to hold the pieces in mutual contact and to arrange the deposit metal, in the form of wires, rings, small plates, powder, etc. , on the surfaces of the pieces and, subsequently, dipping the pieces together in a bath composed of molten salts (sometimes, by the same flux) heated to the suitable brazing temperature.

However, these known systems and methods are not capable of removing or preventing the formation of the alumina (Al₂O₃) layer with such a reliability as to allow automatizing the process of brazing wires in aluminium or aluminium alloys to the connection pins in electric motors and to ensure a sufficient electric conductivity and mechanical resistance of the connection obtained. US 3 765 591 A discloses a brazing method according to the preamble of claim 1.

Therefore, the object of the invention is to provide a brazing method for connecting pieces in aluminium, particularly for connecting electric wires in aluminium or aluminium alloy to connection pins in a metal material, having such characteristics as to ensure a electrically conductive and mechanically resistant connection and to be reproducible and automatable on an industrial scale.

These and other objects are achieved by a method according to claim 1. Advantageous embodiments are the subject-matter of the dependent claims.

According to an aspect of the invention, the method comprises the steps of:
- approximating a first portion of the first aluminium or aluminium alloy piece to or in contact with a second portion of a second metal piece,
- heating a deposit metal (or brazing alloy) beyond its melting temperature,
   and, successively:
- carrying out a first cleaning step by wetting the approximated first and second portions by a flux,
- carrying out a first brazing step by wetting the approximated first and second portions by the molten deposit metal,
- cooling the first and second portions and the deposit metal adhered thereto to solidify the adhered deposit metal,
- carrying out a second cleaning step by wetting the approximated first and second portions and the deposit metal adhered thereto again by a flux,
- carrying out a second brazing step by wetting again the approximated first and second portions and the deposit metal adhered thereto by the molten deposit metal,
- cooling the first and second portions and the deposit metal adhered thereto.

By virtue of the repeated action of the flux and the repeated application of the molten deposit metal onto the surfaces of the two pieces to which the deposit metal was not able to adhere during the first brazing step, together with the application of the second deposit metal layer onto the first deposit metal layer, the area of the residual surfaces without intimate adhesion of the deposit metal is reduced, and a connection surface and an area having a very high electrically conductive cross-section is obtained.

In those areas in which the deposit metal applied during the first brazing step adheres to the aluminium surface, the same deposit metal protects the transition zone against oxidation. In those areas in which the deposit metal did not adhere or inadequately adhered on the aluminium surface and in the interspaces already partially covered by the first deposit metal layer, a second penetration of the flux occurs (during the second cleaning step), which removes the alumina residues. These interspaces, which are clean and "capped" by the flux, turn out to be less accessible to the surrounding air than the completely exposed surfaces before the first brazing step. The second brazing step makes the molten deposit metal to flow again to such areas with a higher adhesion probability.

Furthermore, since in the second brazing step the molten deposit metal wets again also the deposit metal that already adhered during the first step, a melting in the contact area occurs, which creates a substantial material continuity between the two deposit metal layers. In those areas in which the first deposit metal layer already adheres well onto the aluminium surface, covering it in a satisfactory manner, during the second brazing step, the aluminium will heat more slowly, and the transition zone between the aluminium and the first deposit metal layer is not molten again. In the other areas, the residues of deposit metal that adhered or infiltrated inadequately, are molten during the second brazing step, thus allowing a better infiltration and adhesion of the second deposit metal layer onto the aluminium surfaces at issue.

In order to better understand the invention and appreciate the advantages thereof, a description of some exemplary, non-limiting embodiments thereof will be given herein below, with reference to the Figures, in which:

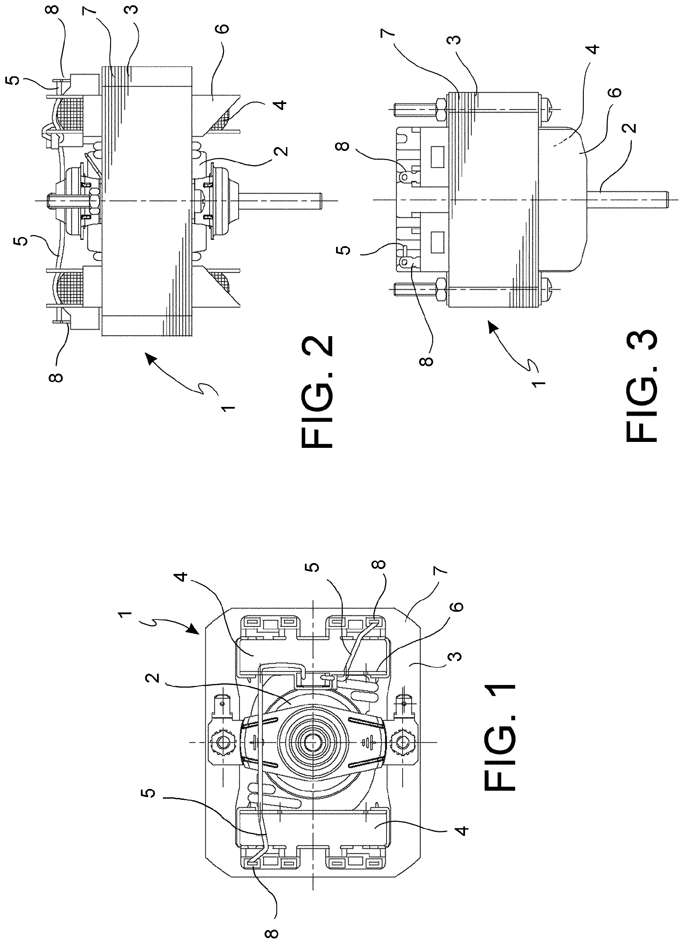

- Fig. 1 is a top view of an electric motor with electric connections between an aluminium wire and a connection pin in a metal material;
- Fig. 2 is a side view of the motor in Fig. 1;
- Fig. 3 is a further side view of the motor in Fig. 1;

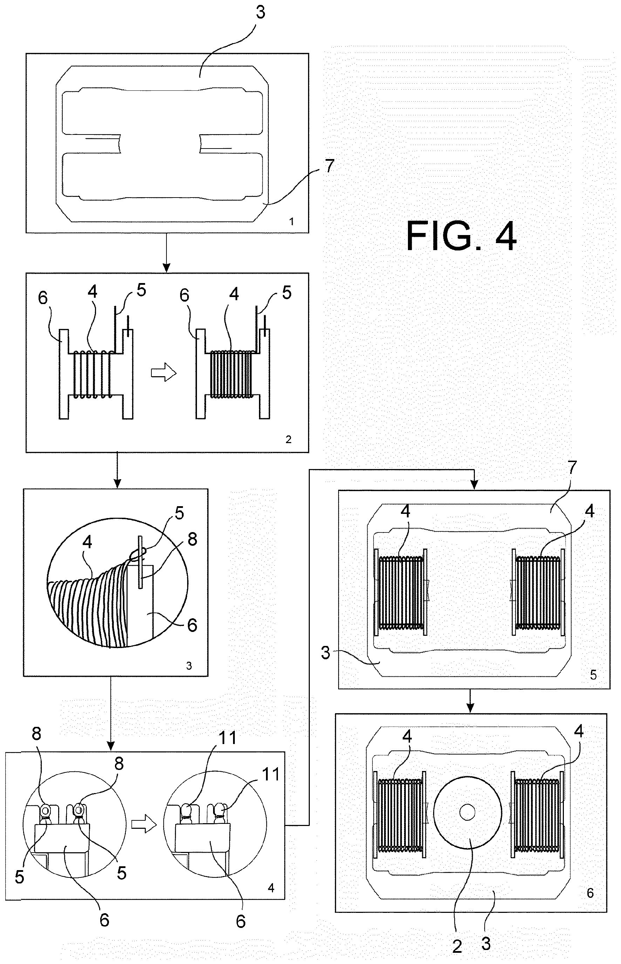

- Fig. 4 is a schematic flow diagram illustrating steps of a manufacturing method of the motor in Fig. 1 according to an embodiment;

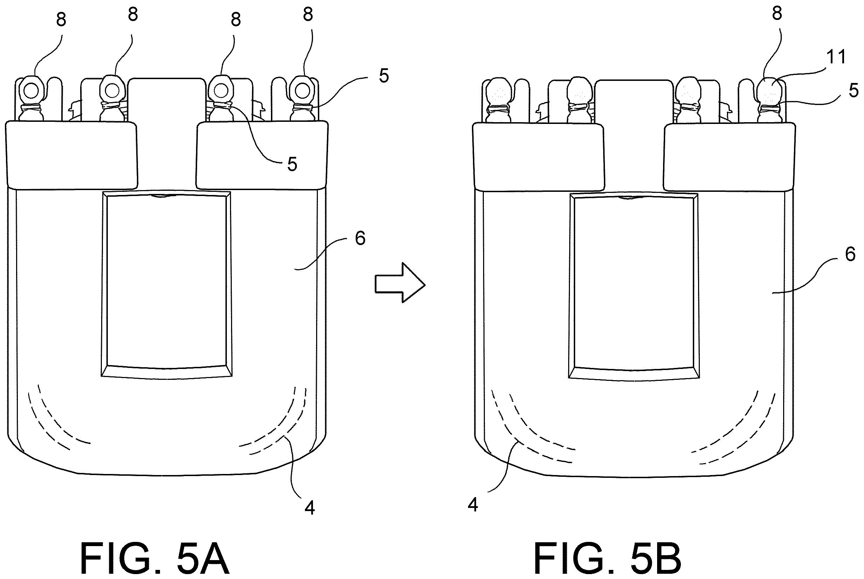

- Figs. 5A and 5B show a stator winding on a plastic support (reel) before and after a brazing step of the method in Fig. 4 according to an embodiment;

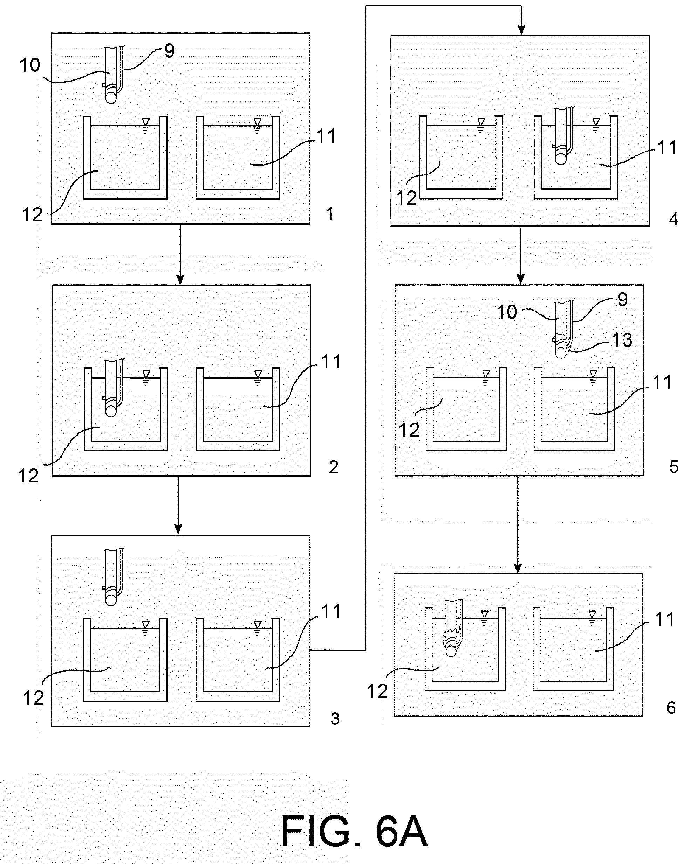

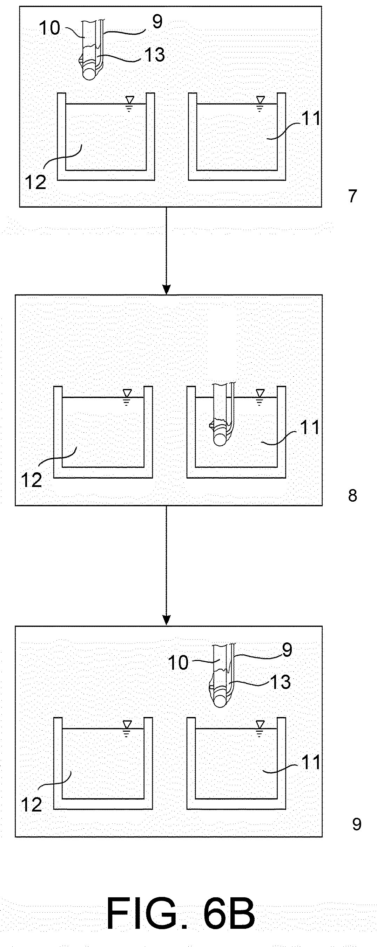

- Figs. 6A and 6B show a schematic flow diagram illustrating steps of a brazing step of the method according to an embodiment of the invention.

Referring to the Figures, a method for manufacturing an electric motor 1 comprises the steps of assembling a rotor 2, arranging a stator 3 with at least one stator winding 4, and connecting the rotor 2 to the stator 3 so as to allow a rotation of the rotor 2 with respect to the stator 3. The stator winding 4 is manufactured by winding a wire 5 in aluminium or aluminium alloys externally insulated by enameling about a support 6 (reel) in plastic material, which support is then inserted on the stator 7 iron, for example, above salient poles, of the stator 3. End portions of the enameled wire 5 in aluminium or aluminium alloys are electrically connected to connection pins 8, for example, metal pins coated by an outer tin layer, secured in the plastic support 6 and, in turn, electrically connected to terminals for the connection to the power grid. The electric connection between the wound wire 5 and the connection pin 8, as well as other possible electric connections of portions of the aluminium wire, to one another, or with other metal components of the motor 1, are to be carried out by a brazing method having the following steps (expressed in generic terms and, in brackets, embodied for the specific example of the connection of conductive wire 5 - connection pin 8):

- approximating a first portion 9 of a first aluminium or aluminium alloy piece to or with a second portion 10 of a second metal piece (e.g., bending the end portion of the enameled wire about the tin-coated connection pin),

- heating a deposit metal 11 beyond its melting temperature (e.g., arranging a molten deposit metal 11 bath),

and, successively:

- carrying out a first cleaning step by wetting by a flux 12 the approximated first and second portions 9, 10 (e.g., by dipping the pin 8 wound by the end portion of the wire 5 into a liquid, for example, molten flux 12 bath),

- carrying out a first brazing step by wetting by the molten deposit metal 11 the approximated first and second portions 9, 10 (e.g., dipping the pin 8 wound by the end portion of the wire 5 into the molten deposit metal 11 bath),

- cooling the first 9 and second 10 portions and the deposit metal adhered thereto 13 to solidify the adhered deposit metal 13 (e.g., withdrawing the pin 8 wound by the end portion of the wire 5 from the molten deposit metal 11 bath and exposing it during a cooling time to a temperature below the melting temperature of the deposit metal 11),

- carrying out a second cleaning step by wetting the approximated first and second portions 9, 10 and the deposit metal adhered thereto 13 again by a flux or "fluxant" (e.g., dipping the pin 8 wound by the end portion of the wire 5 and the deposit metal adhered thereto 13 again into the liquid, for example, molten, flux 12 bath),

- carrying out a second brazing step by wetting again the approximated first and second portions 9, 10 and the deposit metal adhered thereto 13 by the molten deposit metal 11 (e.g., dipping the pin 8 wound by the end portion of the wire 5 and the deposit metal adhered thereto 13 again into the molten deposit metal 11 bath),

- cooling the first 9 and second 10 portions and the deposit metal adhered thereto 13 (e.g., withdrawing the pin 8 wound by the end portion of the wire 5 from the molten deposit metal 11 bath and exposing them during a cooling time at a temperature below the melting temperature of the deposit metal 11).

Wetting by the flux 12 and wetting by the deposit metal 11 by dipping in a flux bath and in a deposit metal bath has the advantage of reliably covering all the areas of the surfaces to be connected without relying only upon the wetting and infiltrating effect due to a low surface tension of the liquid substance.

According to an embodiment, the connection pin 8 or, more generally, the second portion 10 is in copper, preferably, coated with tin.

The flux 12 is preferably a liquid mixture comprising the following compounds: ammonium tetrafluoroborate;
2-(2-aminoethylamino)ethanol;
2,2',2"-nitrilotriethanol;
Tin;
Zinc;
Zinc oxide;
preferably, in the proportions indicated below:

| Component | Weight percentage |
|---|---|
| | w/w [%] |
| Ammonium tetrafluoroborate | 5 - 10 |
| 2-(2-aminoethylamino)ethanol | 10 - 20 |
| 2,2',2"-nitrilotriethanol | 5 - 10 |
| Tin | 1 - 5 |
| Zinc | 1 - 5 |
| Zinc oxide | 5 - 10 |
| Water or another solvent | 40 - 73 |

Preferably, the same flux 12 is used, and, possibly, also the same flux bath for both cleaning steps.

The application temperature of the flux 12 onto the first and the second portions 9, 10 (i.e., the temperature of the flux bath) is the room temperature, ideally from 20°C to 30°C. Such temperature is preferably the same for both cleaning steps.

In accordance with an embodiment, the deposit metal 11 is a tin - copper alloy with a mass percentage of tin above 97%, and a mass percentage of copper below 3%. A series of tests pointed out an optimum ratio of tin and copper of Sn_{99,3}Cu_{0,7}. Preferably, the same deposit metal 11 is used, and possibily also the same deposit metal bath for both brazing steps.

The application temperature of the deposit metal 11, particularly of the Sn_{99,3}Cu_{0,7} alloy, on the first and the second portions 9, 10 (i.e., the temperature of the deposit metal 11 bath) ranges from 350 °C to 550 °C, preferably from 430 °C to 470 °C, with an optimum value of about 450°C. Such temperature is preferably the same for both brazing steps.

In order to accommodate the need for making the flux 12 acting onto the surfaces to be connected by brazing with the need of reducing the times within which a new aluminium oxide layer will be able to be formed, the method provides for a waiting time between the completion of the cleaning step (withdrawing of the first 9 and second portions 10 from the flux 12 bath) and the beginning of the successive brazing step from 1.5 seconds to 12 seconds, preferably from 2 to 3 secondi. This applies to both the cleaning and brazing steps.

The suitable duration of each of the cleaning (dipping duration into the flux 12 bath) and of brazing (dipping duration into the deposit metal 11 bath) steps is from 1.5 seconds to 4.0 secondi, preferably, from 1.5 seconds to 2.5 seconds, still more preferably, about 2 seconds.

Best results have been to date achieved by the followings times for the brazing method:
- First cleaning step with dipping duration into the flux 12 bath of 2 seconds;
- Waiting step of 2-3 seconds;
- First brazing step with dipping duration into the deposit metal 11 bath of 2 seconds;
- Cooling step of 2-3 seconds;
- Second cleaning step with dipping duration into the flux 12 bath of 2 seconds;
- Waiting step of 2-3 seconds;
- Second brazing step with dipping duration into the deposit metal 11 bath of 2 seconds.
- Final cooling.

In the field of the previous description and in the successive claims, all the numeral magnitudes indicating amounts , parameters, percentages, and so on, are to be meant as preceded in any case by the term "about", unless otherwise indicated. Furthermore, all the ranges of numeral magnitudes include all the possible combinations of the maximum and minimum numeral values and all the possible intermediate ranges, besides to those specifically indicated in the text.

## Claims

1. A brazing method for electrically connecting a first aluminium or aluminium alloy piece with a second electrically conductive metal piece, said method comprising:
- approximating a first portion (9) of the first piece to or in contact with a second portion (10) of the second piece,
- heating a deposit metal (11) beyond its melting temperature, and, in the following sequence:
- carrying out a first cleaning step by wetting the approximated first and second portions (9, 10) by a flux (12),
- carrying out a first brazing step by wetting the approximated first and second portions (9, 10) by the molten deposit metal (11),
- cooling the first (9) and second (10) portions and the deposit metal adhered thereto (13) to solidify the adhered deposit metal (13), **characterised in that** the method further comprises the steps:
- carrying out a second cleaning step by wetting the approximated first and second portions (9, 10) and the deposit metal adhered thereto (13) again by a flux (12),
- carrying out a second brazing step by wetting again the approximated first and second portions (9, 10) and the deposit metal adhered thereto (13) by the molten deposit metal (11),
- cooling the first (9) and second (10) portions and the deposit metal adhered thereto (13).

2. The method according to claim 1, wherein the second portion (10) is in copper or copper alloy.

3. The method according to claim 2, wherein the first portion (9) is a conductive wire (5) portion externally insulated by enameling, and the second copper portion (10) is externally coated with tin before approximating it to the first piece.

4. The method according to claim 3, wherein:
- the step of approximating the first portion (9) to the second portion (10) comprises bending a portion of the electric wire (5) around the second copper portion (2);
- the step of heating the deposit metal (11) comprises arranging a molten deposit metal (11) bath;
- the first cleaning step comprises dipping the second copper portion (10) wound by the conductive wire (5) portion in a liquid flux (12) bath;
- the first brazing step comprises dipping the second copper portion (10) wound by the conductive wire (5) portion into the molten deposit metal (11) bath;
- the second cleaning step comprises dipping the second copper portion (10) wound by the conductive wire (5) portion and the deposit metal adhered thereto (13) again into the liquid flux (12) bath;
- the second brazing step comprises dipping the second copper portion (10) wound by the conductive wire (5) portion and the deposit metal adhered thereto (13) again into the molten deposit metal (11) bath;
- the cooling steps of the first (9) and second (10) portions and the deposit metal adhered thereto (13) comprise withdrawing the second copper portion (10) wound by the conductive wire (5) portion from the molten deposit metal (11) bath and exposing them during a cooling time at a temperature below the melting temperature of the deposit metal (11).

5. The method according to any of the previous claims, wherein the flux (12) is a liquid mixture comprising:
ammonium tetrafluoroborate;
2-(2-aminoethylamino)ethanol;
2,2',2"-nitrilotriethanol;
tin;
zinc;
zinc oxide.

6. The method according to claim 5, wherein the flux comprises:
5% - 10% by weight ammonium tetrafluoroborate;
10% - 20% by weight 2-(2-aminoethylamino)ethanol;
5% - 10% by weight 2,2',2"-nitrilotriethanol;
1% - 5% by weight tin;
1% - 5% by weight zinc;
5% - 10% by weight zinc oxide;
wherein the balance is water or another solvent.

7. The method according to any of the previous claims, wherein the deposit metal (11) comprises a tin and copper alloy with a weight percentage of tin above 97% and a weight percentage of copper below 3% of the total weight of the alloy, preferably, a Sn_{99.3}Cu_{0.7} alloy.

8. The method according to any of the previous claims, comprising using the same flux (12) for both cleaning steps and using the same deposit metal (11) for both brazing steps.

9. The method according to any of the previous claims, wherein in both cleaning steps the flux (12) application temperature on the first and the second portions ranges from 20 °C to 30 °C.

10. The method according to any of the previous claims, wherein in both brazing steps the deposit metal (11) application temperature on the first portion and the second portion ranges from 350 °C to 550 °C, preferably 430 °C to 470 °C, with an optimum value of about 450 °C.

11. The method according to any of the previous claims, comprising a waiting step between the completion of the cleaning step and the beginning of the successive brazing step, said waiting step having a duration from 1.5 seconds to 12 seconds, preferably, from 2 to 3 seconds.

12. The method according to any of the previous claims, wherein each of the cleaning and brazing steps has a duration from 1.5 seconds to 2.5 seconds, preferably, about 2 seconds.

## Patentansprüche

1. Lötverfahren zum elektrischen Verbinden eines ersten Stücks aus Aluminium oder einer Aluminiumlegierung mit einem zweiten elektrisch leitfähigen Metallstück, wobei das Verfahren umfasst:
- Annähern eines ersten Abschnitts (9) des ersten Stücks an oder in Kontakt mit einem zweiten Abschnitt (10) des zweiten Stücks,
- Erhitzen eines Anlagerungsmetalls (11) über seine Schmelztemperatur, und in der folgenden Reihenfolge:
- Ausführen eines ersten Reinigungsschritts durch Benässen des angenäherten ersten und zweiten Abschnitts (9, 10) durch ein Fließmittel (12),
- Ausführen eines ersten Lötschritts durch Benässen des angenäherten ersten und zweiten Abschnitts (9, 10) durch das geschmolzene Anlagerungsmetall (11),
- Kühlen des ersten (9) und zweiten (10) Abschnitts und des daran angelagerten Ablagerungsmetalls (13), um das angelagerte Ablagerungsmetall (13) zu verfestigen,
**dadurch gekennzeichnet, dass** das Verfahren ferner die Schritte umfasst:
- Ausführen eines zweiten Reinigungsschritts durch erneutes Benässen des angenäherten ersten und zweiten Abschnitts (9, 10) und des daran angelagerten Ablagerungsmetalls (13) durch ein Fließmittel (12),
- Ausführen eines zweiten Lötschritts durch erneutes Benässen des angenäherten ersten und zweiten Abschnitts (9, 10) und des daran angelagerten Ablagerungsmetalls (13) durch das geschmolzene Ablagerungsmetall (11),
- Kühlen des ersten (9) und zweiten (10) Abschnitts und des daran angelagerten Ablagerungsmetalls (13).

2. Verfahren nach Anspruch 1, wobei der zweite Abschnitt (10) aus Kupfer oder einer Kupferlegierung ist.

3. Verfahren nach Anspruch 2, wobei der erste Abschnitt (9) ein Abschnitt eines leitfähigen Drahts (5) ist, welcher extern durch eine Lackierung isoliert ist, und wobei der zweite Kupferabschnitt (10) extern mit Zinn beschichtet ist, bevor er an das erste Stück angenähert wird.

4. Verfahren nach Anspruch 3, wobei:
- der Schritt des Annäherns des ersten Abschnitts (9) an den zweiten Abschnitt (10) ein Biegen eines Abschnitts des elektrischen Drahts (5) um den zweiten Kupferabschnitt (2) herum umfasst;
- der Schritt des Erhitzens des Ablagerungsmetalls (11) ein Anordnen eines Bades von geschmolzenem Ablagerungsmetall (11) umfasst;
- der erste Reinigungsschritt ein Eintauchen des zweiten Kupferabschnitts (10), welcher durch den Abschnitt des leitfähigen Drahts (5) gewickelt ist, in ein Bad von flüssigem Fließmittel (12) umfasst;
- der erste Lötschritt ein Eintauchen des zweiten Kupferabschnitts (10), welcher durch den Abschnitt des leitfähigen Drahts (5) gewickelt ist, in das Bad des flüssigen Ablagerungsmetalls (11) umfasst;
- der zweite Reinigungsschritt ein erneutes Eintauchen des zweiten Kupferabschnitts (10), welcher durch den Abschnitt des leitfähigen Drahts (5) gewickelt ist, und des daran angelagerten Ablagerungsmetalls (13) in das Bad des flüssigen Fließmittels (12) umfasst;
- der zweite Lötschritt ein erneutes Eintauchen des zweiten Kupferabschnitts (10), welcher durch den Abschnitt des leitfähigen Drahts (5) gewickelt ist, und des daran angelagerten Ablagerungsmetalls (13) in das Bad des flüssigen Ablagerungsmetalls (11) umfasst;
- die Kühlschritte des ersten (9) und zweiten (10) Abschnitts und des daran angelagerten Ablagerungsmetalls (13) ein Abziehen des zweiten Kupferabschnitts (10), welcher durch den Abschnitt des leitfähigen Drahts (5) gewickelt ist, aus dem Bad des geschmolzenen Ablagerungsmetalls (11) und ein Aussetzen von ihnen einer Temperatur unterhalb der Schmelztemperatur des Ablagerungsmetalls (11) während einer Kühlzeit umfassen.

5. Verfahren nach einem der vorhergehenden Ansprüche, wobei das Fließmittel (12) eine flüssige Mischung ist, umfassend:
Ammonium-Tetraflouroborat;
2-(2-Aminoethylamino)Ethanol;
2,2',2"-Nitrilotriethanol;
Zinn;
Zink;
Zinkoxid.

6. Verfahren nach Anspruch 5, wobei das Fließmittel umfasst:
5 - 10 Gewichts-% Ammonium-Tetraflouroborat;
10 - 20 Gewichts-% 2-(2-Aminoethylamino)Ethanol;
5 - 10 Gewichts-% 2,2',2"-Nitrilotriethanol;
1 - 5 Gewichts-% Zinn;
1 - 5 Gewichts-% Zink;
5 - 10 Gewichts-% Zinkoxid;
wobei der Rest Wasser oder ein anderes Lösungsmittel ist.

7. Verfahren nach einem der vorhergehenden Ansprüche, wobei das Ablagerungsmetall (11) eine Zinn- und Kupferlegierung mit einem Gewichts-Anteil von Zinn oberhalb 97% und einem Gewichts-Anteil von Kupfer unterhalb 3% des Gesamtgewichts des Legierung umfasst, vorzugsweise eine Sn_{99,3}Cu_{0,7}-Legierung.

8. Verfahren nach einem der vorhergehenden Ansprüche, umfassend ein Verwenden des gleichen Fließmittels (12) für beide Reinigungsschritte und ein Verwenden des gleichen Ablagerungsmetalls (11) für beide Lötschritte.

9. Verfahren nach einem der vorhergehenden Ansprüche, wobei in beiden Reinigungsschritten die Anwendungstemperatur des Fließmittels (12) auf den ersten und zweiten Abschnitt im Bereich von 20°C bis 30°C liegt.

10. Verfahren nach einem der vorhergehenden Ansprüche, wobei in beiden Lötschritten die Anwendungstemperatur des Ablagerungsmetalls (11) auf den ersten Abschnitt und den zweiten Abschnitt im Bereich von 350°C bis 550°C, vorzugsweise 430°C bis 470°C, liegt, mit einem optimalen Wert von etwa 450°C.

11. Verfahren nach einem der vorhergehenden Ansprüche, umfassend einen Warteschritt zwischen dem Abschließen des Reinigungsschritts und dem Beginn des nachfolgenden Lötschritts, wobei der Warteschritt eine Dauer von 1,5 Sekunden bis 12 Sekunden, vorzugsweise von 2 bis 3 Sekunden, aufweist.

12. Verfahren nach einem der vorhergehenden Ansprüche, wobei jeder der Reinigungs- und Lötschritte eine Dauer von 1,5 Sekunden bis 2,5 Sekunden, vorzugsweise etwa 2 Sekunden, aufweist.

## Revendications

1. Procédé de brasage pour connecter électriquement une première pièce en aluminium ou en alliage d'aluminium avec une seconde pièce métallique électriquement conductrice, ledit procédé comprenant :
- le rapprochement d'une première portion (9) de la première pièce d'une seconde portion (10) de la seconde pièce ou en contact avec celle-ci,
- le chauffage d'un métal de dépôt (11) au-delà de sa température de fusion,
et, dans la séquence suivante :
- la réalisation d'une première étape de nettoyage en mouillant les première et seconde portions rapprochées (9, 10) par un flux (12),
- la réalisation d'une première étape de brasage en mouillant les première et seconde portions rapprochées (9, 10) par le métal de dépôt fondu (11),
- le refroidissement des première (9) et seconde (10) portions et du métal de dépôt y adhérant (13) afin de solidifier le métal de dépôt adhérant (13),
**caractérisé en ce que** le procédé comprend en outre les étapes :
- de réalisation d'une seconde étape de nettoyage en mouillant les première et seconde portions rapprochées (9, 10) et le métal de dépôt y adhérant (13) de nouveau par un flux (12),
- de réalisation d'une seconde étape de brasage en mouillant à nouveau les première et seconde portions rapprochées (9, 10) et le métal de dépôt y adhérant (13) par le métal de dépôt fondu (11),
- de refroidissement des première (9) et seconde (10) portions et du métal de dépôt y adhérant (13).

2. Procédé selon la revendication 1, dans lequel la seconde portion (10) est en cuivre ou en alliage de cuivre.

3. Procédé selon la revendication 2, dans lequel la première portion (9) est une portion de fil conducteur (5) extérieurement isolée par émaillage, et la seconde portion en cuivre (10) est extérieurement recouverte d'étain avant d'être rapprochée de la première pièce.

4. Procédé selon la revendication 3, dans lequel :
- l'étape de rapprochement de la première portion (9) de la seconde portion (10) comprend le pliage d'une portion du fil électrique (5) autour de la seconde portion en cuivre (2) ;
- l'étape de chauffage du métal de dépôt (11) comprend l'agencement d'un bain de métal de dépôt fondu (11);
- la première étape de nettoyage comprend le trempage de la seconde portion en cuivre (10) enroulée par la portion de fil conducteur (5) dans un bain de flux de liquide (12) ;
- la première étape de brasage comprend le trempage de la seconde portion en cuivre (10) enroulée par la portion de fil conducteur (5) dans le bain de métal de dépôt fondu (11);
- la seconde étape de nettoyage comprend le trempage de la seconde portion en cuivre (10) enroulée par la portion de fil conducteur (5) et le métal de dépôt y adhérant (13) à nouveau dans le bain de flux liquide (12) ;
- la seconde étape de brasage comprend le trempage de la seconde portion en cuivre (10) enroulée par la portion de fil conducteur (5) et le métal de dépôt y adhérant (13) à nouveau dans le bain de métal de dépôt fondu (11) ;
- les étapes de refroidissement des première (9) et seconde (10) portions et du métal de dépôt y adhérant (13) comprennent le retrait de la seconde portion en cuivre (10) enroulée par la portion de fil conducteur (5) du bain de métal de dépôt fondu (11) et leur exposition durant un temps de refroidissement à une température inférieure à la température de fusion du métal de dépôt (11).

5. Procédé selon l'une quelconque des revendications précédentes, dans lequel le flux (12) est un mélange liquide comprenant :
du tétrafluoroborate d'ammonium ;
du 2-(2-aminoéthylamino)éthanol ;
du 2,2',2"-nitrilotriéthanol ;
de l'étain ;
du zinc ;
de l'oxyde de zinc.

6. Procédé selon la revendication 5, dans lequel le flux comprend :
de 5 % à 10 % en poids de tétrafluoroborate d'ammonium ;
de 10 % à 20 % en poids de 2-(2-aminoéthylamino)éthanol ;
de 5 % à 10 % en poids de 2,2',2"-nitrilotriéthanol ;
de 1 % à 5 % en poids d'étain ;
de 1 % à 5 % en poids de zinc ;
de 5 % à 10 % en poids d'oxyde de zinc ;
dans lequel le reste est de l'eau ou un autre solvant.

7. Procédé selon l'une quelconque des revendications précédentes, dans lequel le métal de dépôt (11) comprend un alliage d'étain et de cuivre avec un pourcentage en poids d'étain supérieur à 97 % et un pourcentage en poids de cuivre inférieur à 3 % du poids total de l'alliage, de préférence, un alliage de Sn_{99,3}Cu_{0,7}.

8. Procédé selon l'une quelconque des revendications précédentes, comprenant l'utilisation du même flux (12) pour les deux étapes de nettoyage et l'utilisation du même métal de dépôt (11) pour les deux étapes de brasage.

9. Procédé selon l'une quelconque des revendications précédentes, dans lequel lors des deux étapes de nettoyage la température d'application de flux (12) sur la première et la seconde portion est comprise dans la plage de 20 °C à 30 °C.

10. Procédé selon l'une quelconque des revendications précédentes, dans lequel lors des deux étapes de brasage la température d'application de métal de dépôt (11) sur la première portion et la seconde portion est comprise dans la plage de 350 °C à 550 °C, de préférence de 430 °C à 470 °C, avec une valeur optimale d'environ 450 °C.

11. Procédé selon l'une quelconque des revendications précédentes, comprenant une étape d'attente entre la fin de l'étape de nettoyage et le début de l'étape de brasage suivante, ladite étape d'attente ayant une durée de 1,5 seconde à 12 secondes, de préférence, de 2 à 3 secondes.

12. Procédé selon l'une quelconque des revendications précédentes, dans lequel chacune des étapes de nettoyage et de brasage a une durée de 1,5 seconde à 2,5 secondes, de préférence, d'environ 2 secondes.
